# DEMANDE DE BREVET EUROPEEN

(11) **EP 0 720 819 A2**
(43) Date de publication de la demande: **10.07.1996**
(21) Numéro de dépôt: 95402929.4
(22) Date de dépôt: 22.12.1995
(51) Int. Cl.: A23G 3/00, A23G 3/04

(54) **Sucre cuit sans sucre et son procédé de fabrication**

(30) Priorité: 26.12.1994 FR 9415648; 06.06.1995 US 470462
(71) Demandeur: Roquette Frères, F-62136 Lestrem (FR)
(72) Inventeur: Serpelloni, Michel, F-62660 Beuvry les Bethune (FR); Ribadeau-Dumas, Guillaume, F-59130 Lambersart (FR)
(74) Mandataire: Boulinguiez, Didier

(57) **Abrégé**

L'invention concerne un nouveau sucre cuit sans sucre caractérisé en ce qu'il présente une teneur en eau élevée et en ce qu'il contient, sur matière sèche, 5 à 100 % d'au moins un polyol cristallisable dans l'eau, et en ce qu'il présente une température de transition vitreuse, mesurée pour une teneur en eau particulière, au moins égale à 38°C. L'invention concerne également un procédé de fabrication de ce sucre cuit.

## Description

La présente invention a trait à un nouveau sucre cuit sans sucre ayant une teneur en eau supérieure aux teneurs usuelles pour ce type de confiserie et présentant, malgré cette teneur en eau élevée, une très haute stabilité.

L'invention concerne également un procédé de fabrication de ce sucre cuit et l'utilisation, lors de sa production, d'une composition de carbohydrates particulière.

Les sucres cuits, appelés aussi communément bonbons durs, sont des produits de confiserie solides et essentiellement amorphes. Ils sont obtenus par déshydratation poussée de sirops de carbohydrates.

Le marché essentiel des sucres cuits est toujours aujourd'hui constitué de produits dits "de sucre" préparés à partir de sirops de carbohydrates non hydrogénés. Il existe aussi des sucres cuits essentiellement amorphes dits "sans sucre" ou "aux polyols", obtenus en employant des sirops de carbohydrates hydrogénés ou des sirops de carbohydrates faiblement digestibles.

Les sucres cuits sans sucre, auxquels on s'intéresse dans la présente invention, connaissent un succès grandissant en raison du fait que d'une part, ils ne favorisent pas le développement des caries dentaires et d'autre part, sont jugés moins caloriques que les sucres cuits traditionnels de sucre, tout en possédant des caractéristiques organoleptiques similaires.

Généralement, on prépare les sucres cuits sans sucre en procédant à la cuisson de mélanges de polyols dissous dans l'eau. Il s'agit le plus souvent de sirops de maltitol tels que ceux commercialisés par la demanderesse sous le nom de LYCASIN® 80/55, de MALTISORB® 75/75 ou de MALTISOR® 70/85, auxquels on peut ajouter des polyols pulvérulents comme le maltitol, le mannitol, l'érythritol ou l'isomalt. Ce dernier polyol peut être également utilisé seul après l'avoir dissous dans l'eau.

Ces mélanges de polyols sont cuits jusqu'à 150-200°C à pression ambiante pour évaporer l'essentiel de l'eau, puis on termine généralement la cuisson sous vide pour abaisser encore davantage la teneur en eau et l'amener à une valeur d'ordinaire toujours inférieure à 2,5 %, voire 1,5 %. La masse cuite ainsi obtenue est refroidie. Elle est ensuite coulée en moules ou bien formée sur rouleaux ou par extrusion, après avoir ajouté différentes substances telles qu'arômes, édulcorants intenses, colorants, acides, extraits de plantes, vitamines ou principes actifs pharmaceutiques. Après retour à la température ambiante, les produits obtenus présentent une texture et une apparence semblables à celle d'un verre.

On demande aux sucres cuits sans sucre d'être stables au cours du temps, c'est à dire d'évoluer le moins possible depuis le moment où ils sont fabriqués jusqu'au moment où ils sont consommés, et cela pour rester des produits attrayants et agréables en bouche.

Or, les sucres cuits sans sucre ne sont malheureusement pas des produits stables du point de vue thermodynamique. L'importance de leur évolution dépend essentiellement de leurs compositions après fabrication mais aussi des conditions dans lesquelles ils sont conservés.

En premier lieu, les sucres cuits sans sucre peuvent devenir des produits collants lors du stockage. Lorsqu'ils sont papillotés, il devient alors difficile, voire impossible, d'éliminer leurs papiers d'emballage avant de les consommer. Ils peuvent aussi prendre en masse sans rester individualisés, ce qui est encore plus génant.

On explique cette évolution problématique vers un état collant et sirupeux, par des phénomènes de surface ou/et par des phénomènes en profondeur.

Les phénomènes de surface trouvent leur origine dans le caractère hygroscopique des sucres cuits. On sait en effet que les sucres cuits, produits presque anhydres par essence, présentent des humidités relatives d'équilibre toujours très basses, nettement inférieures aux humidités relatives ambiantes habituelles de stockage. Ceci explique qu'une reprise en eau a forcément lieu à la surface des bonbons dès qu'ils sont et restent exposés à l'air, comme c'est le cas des sucettes par exemple. Lorsque cette reprise en eau est suffisamment importante, elle tend à liquéfier la surface des bonbons et à leur communiquer les caractéristiques d'un sirop, c'est à dire en particulier à leur communiquer un caractère collant. Cette évolution apparaît d'autant plus rapidement que les sucres cuits présentent une teneur basse en eau.

Les phénomènes en profondeur, qui ne concernent donc pas uniquement la surface mais la totalité de la masse des bonbons, ont une origine thermique. Plus précisément, il convient, pour que ces phénomènes aient lieu, que la température de stockage dépasse quelque peu la température de transition vitreuse du sucre cuit. Cette notion à laquelle on se réfère ici est largement décrite dans l'excellent article "La transition vitreuse : incidences en technologie alimentaire" de M. Le Meste et D. Simatos publié dans I.A.A. de Janvier / Février, 1990. La température de transition vitreuse est la température à laquelle, par chauffage, un sucre cuit vitreux et solide devient un liquide sirupeux amorphe. Elle est habituellement déterminée par calorimétrie thermique différentielle. On comprend très bien qu'un sucre cuit puisse être sujet à une déformation, voire à un écoulement complet, lorsque sa température de conservation est élevée et dépasse sa température de transition vitreuse. Le produit initialement sec au toucher devient collant. Il convient de noter que plus le sucre cuit en question est riche en eau, plus il est sujet à un risque d'évolution de cette nature durant sa conservation.

En conclusion, pour éviter que les sucres cuits ne deviennent des produits collants au stockage, il est toujours apparu nécessaire que leur teneur en eau soit ajustée et ne soit pas trop forte.

En second lieu, les sucres cuits peuvent avoir tendance lors du stockage à cristalliser de manière incontrôlée et de ce fait perdre leur aspect vitreux très attrayant, en ressemblant alors davantage à des sucres d'orge qui, comme on le sait, sont très différents des produits de confiserie auxquels on s'intéresse dans le cadre de la présente invention. Cette cristallisation peut avoir lieu seulement en surface du bonbon ou bien également au coeur du bonbon.

La cristallisation de surface nécessite inéluctablement une reprise en eau significative et correspond à un stade d'évolution complémentaire par rapport à celui décrit plus haut. Elle nécessite également une concentration suffisante en molécules cristallisables, en général des molécules de maltitol, de mannitol, d'érythritol ou d'isomalt, dans la couche périphérique liquéfiée. Lorsque ces deux conditions sont réunies, on observe alors une cristallisation, qui s'opère depuis la surface du bonbon vers son centre. Ce phénomène, lorsqu'il est incontrôlé, est connu sous le nom de tournage. Il rend les bonbons totalement opaques et blancs.

La cristallisation peut avoir lieu aussi très directement au coeur du sucre cuit si celui-ci est très riche en eau ou si la température de stockage est trop forte. Dans ces conditions, le sucre cuit présente alors une mollesse excessive et ne peut plus être considéré comme un véritable solide. Il s'agit alors plutôt d'un liquide sursaturé en molécules cristallisables dont l'évolution vers un état cristallin est inéluctable et quasiment spontanée. Les spécialistes dénomment ce type de cristallisation sous le terme de grainage. Ce phénomène s'observe en particulier pour les sucres cuits coulés à base de sorbitol.

En définitive, pour éviter que les sucres cuits ne soient instables et ne deviennent au cours du temps des produits collants ou bien des produits tournés ou grainés, il a toujours semblé impératif d'ajuster leur teneur en eau.

Pour les sucres cuits sans sucre il a toujours été considéré que cette valeur de teneur en eau était la caractéristique la plus essentielle à prendre en compte. Ceci est clairement indiqué par exemple dans les brevets EP 094.292, EP 518.770 et EP 611.527, où une valeur toujours inférieure à 3 % est préconisée pour obtenir des produits suffisamment stables.

On ne connaît aucun sucre cuit sans sucre stable contenant plus de 3,0 % d'eau, si ce n'est certains bonbons au sorbitol qui sont des produits grainés dès leur fabrication.

Jusqu'à présent, il ne semble pas qu'il existe des solutions viables permettant de préparer des sucres cuits sans sucre essentiellement amorphes, riches en eau et stables. De tels produits seraient pourtant avantageux à plusieurs titres, notamment en raison du fait qu'ils seraient d'un coût moindre pour une qualité identique, voire meilleure, à celle des produits du marché.

L'invention a pour but de remédier aux inconvénients de l'art antérieur et de fournir un nouveau sucre cuit sans sucre répondant nettement mieux que les produits existants aux attentes des confiseurs et aux différentes exigences de la pratique, c'est à dire possédant une stabilité sensiblement améliorée au stockage.

A l'issue de recherches approfondies, la société demanderesse a eu le mérite de trouver que ce but pouvait être atteint et qu'il était possible contre toute attente de préparer un sucre cuit sans sucre stable bien que comportant une teneur en eau élevée, c'est à dire supérieure à 3 %.

Ce sucre cuit sans sucre peut être qualifié de "stable" dans la mesure où, au cours du temps, il n'a pas tendance :
- ni à devenir collant,
- ni à grainer, ni à tourner en devenant opaque et blanc en surface ou à coeur,
- ni à se déformer aux températures estivales habituelles aux climats tempérés.

La société demanderesse a découvert que, de façon surprenante et inattendue, pour obtenir un sucre cuit sans sucre stable, présentant une teneur en eau anormalement élevée, il convenait à la fois d'ajuster la quantité de polyols cristallisables au sein de la confiserie de sorte que seule une microcristallisation de ceux-ci puisse avoir lieu au cours du temps en surface du bonbon, et de veiller à ce que la température de transition vitreuse du bonbon, nécessairement abaissée du fait de la teneur en eau plus élevée, soit corrigée par le choix approprié d'une composition de carbohydrates.

Par polyols cristallisables, on entend dans la présente invention les mono et disaccharides hydrogénés susceptibles d'être cristallisés dans l'eau. Il peut s'agir avantageusement du maltitol, de l'isomalt, du mannitol ou de l'érythritol. D'autres polyols cristallisables, tels que le sorbitol, le xylitol ou le lactitol peuvent être retenus mais il a été constaté par la demanderesse que ceux-ci génèrent plus difficilement une microcristallisation à la surface du sucre cuit sans sucre.

Par "microcristallisation" on entend dans la présente invention une cristallisation des polyols cristallisables pratiquement invisible à l'oeil nu, que ce soit à la surface ou à l'intérieur du sucre cuit, et qui, en aucun cas ne rend le sucre cuit blanc ou opaque.

En d'autres termes, il est impératif, pour qu'un tel sucre cuit sans sucre soit stable, qu'il présente à la fois une teneur appropriée en au moins un polyol cristallisable et une température de transition vitreuse au moins égale à 38°C, cette température de transition vitreuse étant mesurée à une teneur en eau voisine de 3,2 %. On rappelle en effet que la température de transition vitreuse évolue en fonction de la teneur en eau, cette température étant d'autant plus basse que la teneur en eau est élevée.

L'invention a donc pour objet un sucre cuit sans sucre caractérisé en ce qu'il présente :
- une teneur en eau supérieure à 3 %,
- une teneur en au moins un polyol cristallisable comprise entre 5 % et 100 %, de préférence entre 10 et 90 % et plus préférentiellement entre 15 et 77 %, cette teneur étant exprimée sur matière sèche, le complément éventuel à 100 % étant essentiellement constitué d'oligo et de polysaccharides,
- et une température de transition vitreuse au moins égale à 38°C, cette température de transition vitreuse étant mesurée à une teneur en eau de 3,2 % environ.

De préférence, le polyol cristallisable est choisi parmi le maltitol, l'isomalt, le mannitol et l'érythritol.

Le sucre cuit sans sucre conforme à l'invention contient plus de 3 % d'eau et une composition de carbohydrates particulière, faiblement digestible et/ou hydrogénée, propre à lui conférer une température de transition vitreuse au moins égale à 38°C, cette température étant mesurée pour une teneur en eau de 3,2 % environ. De façon avantageuse, ce sucre cuit contient plus de 3,2 %, plus préférentiellement plus de 3,5 %, et encore plus préférentiellement plus de 4,0 % d'eau. Par rapport aux sucres cuits sans sucre connus, il présente l'avantage de pouvoir être produit par cuisson à une température peu poussée.

De préférence, le sucre cuit sans sucre selon l'invention présente une température de transition vitreuse supérieure à 38°C pour la teneur en eau effective du sucre cuit. La teneur en eau effective correspond à la teneur en eau finale du sucre cuit sans sucre en fin de fabrication.

La composition de carbohydrates particulière propre à être utilisée conformément à l'invention, peut être choisie parmi les sirops hydrogénés décrits dans les demandes de brevet EP 0.561.089, EP 0.561.088 et EP 0.611.527 dont la société demanderesse est titulaire et de préférence parmi les sirops qui sont décrits dans ces demandes et qui contiennent de 45 à 77 % de maltitol ou d'isomaltulose hydrogéné et plus de 10 %, et de préférence entre 20 à 55 %, d'oligo et polysaccharides hydrogénés.

Les sirops préférés sont des sirops à teneur moyenne en maltitol ou en isomalt. Il a été constaté que lorsque ces sirops présentent des teneurs en maltitol ou en isomalt très élevées, comprises entre 77 et 90 %, les sucres cuits sans sucre obtenus sont plutôt hygroscopiques et sujets à la casse lors de leur mise sous papillotes. De plus, il est très difficile avec ces sirops de produire des sucres cuits sans sucre ayant une température de transition vitreuse dépassant 38°C lorsqu'ils présentent, conformément à l'invention, une teneur particulièrement élevée en eau. C'est ainsi que l'on utilise de préférence, selon l'invention, des sirops contenant de 45 à 77 % de maltitol ou d'isomalt, plus préférentiellement de 45 à 65 % de maltitol ou d'isomalt et plus préférentiellement encore de 50 à 60 % de maltitol ou d'isomalt. De façon surprenante et inattendue, on a pu constater que ces teneurs moyennes permettaient d'obtenir plus facilement une microcristallisation de surface, pour les teneurs en eau imposées conformément à l'invention, que ne le permettaient des teneurs plus élevées et préconisées antérieurement par exemple dans le brevet US 5,134,708.

Ainsi, on obtient des sucres cuits sans sucre nettement plus stables que ceux de l'art antérieur bien qu'ils contiennent moins de maltitol ou d'isomalt que d'ordinaire.

Les sirops de maltitol peuvent être produits soit directement par hydrolyse d'amidon, notamment sous l'action d'une béta-amylase, soit indirectement par mélange de produits liquides ou solides, dont un au moins d'entre eux est riche en maltitol. Les sirops d'isomalt peuvent quant à eux être également préparés par mélange.

Le complément à 100 % de la matière sèche du sucre cuit sans sucre conforme à l'invention peut être constitué d'oligosaccharides et de polysaccharides réputés peu digestibles c'est-à-dire moins digestibles que ne le sont les sucres. Il peut s'agir en particulier d'oligosaccharides et de polysaccharides, de dextrines, ou de polyglucoses comme les polydextroses, tels que ceux obtenus, après hydrogénation ou non, selon le procédé décrit dans les demandes de brevet EP 561,090 et EP 593 368 dont la société demanderesse est titulaire, ou encore selon le procédé décrit dans la demande de brevet EP 368,451.

La composition de carbohydrates particulière propre à être utilisée conformément à l'invention peut être un sirop comprenant de 5 à 45 %, de préférence 10 à 40 % et plus préférentiellement de 15 à 35 % de mannitol ou d'érythritol ; le complément à 100 % de la matière sèche pouvant être des oligosaccharides ou des polysaccharides digestibles issus de l'hydrolyse d'amidon, de préférence hydrogénés, ou des oligosaccharides et polysaccharides peu digestibles tels que ceux définis ci-dessus.

Il est à noter que par le choix approprié de la composition de carbohydrates particulière, il est possible de préparer un sucre cuit sans sucre non cariogène.

Une autre caractéristique du sucre cuit sans sucre conforme à l'invention est celle de présenter une activité de l'eau supérieure à celle d'un sucre cuit sans sucre habituel. D'ordinaire, le sucre cuit conforme à l'invention possède une activité de l'eau supérieure à 0,30. Dans le cas préféré, c'est à dire celui des bonbons présentant des teneurs en eau encore plus élevées, l'activité de l'eau est supérieure à 0,32, voire supérieure à 0,35.

La société demanderesse a remarqué qu'une stabilité encore plus grande est obtenue en faisant en sorte que la température de transition vitreuse, mesurée pour une teneur en eau de 3,2 % environ, et de préférence pour la teneur en eau effective du sucre cuit, soit au moins égale à 40°C, l'idéal étant de dépasser 43°C et mieux encore de dépasser 45°C.

Le sucre cuit sans sucre conforme à l'invention présente plusieurs avantages.

Il peut être fabriqué à plus basse température que d'ordinaire, ce qui permet de réduire de façon notable les coûts de fabrication mais aussi de limiter les temps d'immobilisation de matériel. En général, les températures de cuisson peuvent être abaissées de plusieurs degrés. Très souvent, cette réduction atteint de 10 à 15°C par rapport aux températures usuelles.

Le sucre cuit sans sucre conforme à l'invention est par ailleurs peu hygroscopique. Il a été constaté que les vitesses de reprise en eau de l'atmosphère ambiante sont plus faibles que celles des sucres cuits traditionnels dès les premiers jours suivant la fabrication et que par la suite une microcristallisation est possible. Ceci est le cas en particulier lors de l'utilisation de sirops de maltitol, et notamment, de façon inattendue, lors de l'emploi de sirops présentant une teneur en maltitol moyenne, c'est à dire une teneur de 45 % à 77 % par rapport à la composition sèche. La cristallisation reste dans tous les cas invisible à l'oeil nu, de sorte que le sucre cuit présente l'avantage de demeurer totalement transparent.

Le sucre cuit sans sucre conforme à l'invention a également tendance à être de couleur très claire, en raison de la possibilité d'effectuer la cuisson à plus basse température.

Enfin, le sucre cuit sans sucre conforme à l'invention est très stable à la température et n'a pas tendance à s'écouler ou à se déformer aux températures estivales sous nos climats tempérés.

L'invention concerne également un procédé de préparation d'un nouveau sucre cuit sans sucre stable, bien que comportant plus d'eau que d'ordinaire. Ce procédé se caractérise en ce qu'il comprend la préparation d'un sirop contenant sur sec 5 à 100 %, préférentiellement de 10 à 90 %, et plus préférentiellement encore de 15 à 77 %, d'un polyol cristallisable choisi de préférence parmi le maltitol, l'isomalt, le mannitol, l'érythritol, le sorbitol, le xylitol et le lactitol, propre à conférer au sucre cuit sans sucre une température de transition vitreuse au moins égale à 38°C, mesurée pour une teneur en eau de 3,2 % environ et préférentiellement pour la teneur en eau effective du sucre cuit. Il se caractérise aussi en ce qu'il comprend la cuisson du sirop ainsi préparé à une température suffisante pour permettre la vitrification d'une masse cuite contenant plus de 3,0 %, de préférence plus de 3,2 % et plus préférentiellement encore plus de 3,5 % d'eau.

Les autres opérations unitaires de fabrication du nouveau sucre cuit sans sucre peuvent être identiques à celles réalisées d'ordinaire pour les sucres cuits de sucre ou sans sucre. C'est ainsi que l'on peut indifféremment façonner le sucre cuit par des techniques connues de coulage, de formage ou d'extrusion.

Il convient de signaler que la quantité d'eau à ajouter pour préparer le sirop de carbohydrates destiné à fabriquer le sucre cuit de sucre de l'invention peut être avantageusement réduite substantiellement par rapport aux quantités habituelles, compte tenu du fait de l'emploi d'une plus faible quantité de polyol cristallisable par rapport à l'ordinaire.

Il convient également de signaler que des édulcorants intenses, des arômes, des colorants et/ou des exhausteurs d'arômes ou d'édulcorants comme le maltitol et l'éthyl maltol peuvent être utilisés sans aucun problème pour ajuster les propriétés organoleptiques du bonbon au sucre cuit sans sucre conforme à l'invention.

L'invention pourra être mieux comprise à la lumière des exemples suivants qui se veulent illustratifs de l'invention et non pas limitatifs.

### Exemple 1 :

Bonbons sans sucre à haute teneur en eau.

On prépare à l'aide d'un cuiseur pilote des bonbons sans sucre par utilisation d'une composition telle que décrite dans la demande de brevet EP 0 611 527. Plus précisément, on utilise un sirop de maltitol comprenant, sur sec, 50 % de maltitol et 50 % de polysaccharides de poids moléculaire supérieur à 3000.

On procède à une cuisson à 145°C sous vide.

Les bonbons obtenus, conformes à l'invention, sont très stables et présentent une teneur en eau voisine de 3,4 % et une température de transition vitreuse voisine de 42°C.

On constate que par rapport à l'emploi de sirop de maltitol LYCASIN® 80/55 de l'art antérieur, contenant également environ 50°C de maltitol, il a été possible de réduire de 15°C environ la température de cuisson nécessaire pour obtenir une température de transition vitreuse équivalente, ce qui est très avantageux en terme de coût de revient.

### Exemple 2 :

Bonbons sans sucre hypocaloriques à haute teneur en eau.

On prépare à l'aide du cuiseur pilote de l'exemple 1 des bonbons sans sucre hypocaloriques par emploi d'un sirop et présentant une matière sèche de 75 % et contenant à l'état dissous, rapporté à la matière sèche, 85 % de polydextrose commercialisé par la Société PFIZER sous la marque LITESSE® II et 15 % de mannitol commercialisé par la demanderesse.

On procède à une cuisson à 150°C sans appliquer de vide.

La masse cuite est ensuite refroidie vers 100°C avant d'ajouter un arôme et un mélange édulcorant, d'aspartame et d'acésulfame K. Puis la masse est mise en forme sur rouleaux.

Les bonbons ainsi obtenus, conformes à l'invention, présentent une teneur en eau de 3,10 % et une température de transition vitreuse de 45°C environ.

On constate qu'au cours du stockage, ces sucres cuits sans sucre hypocaloriques sont particulièrement stables et très nettement moins hygroscopiques que le sont des sucres cuits sans sucre ordinaires formulés avec LITESSE® II seulement ou LYCASIN® 80/55.

Ces sucres cuits sans sucre hypocaloriques sont également plus stables que des sucres cuits sans sucre du marché formulés avec isomalt ou MALTISORB® 70/85 car ils n'ont pas tendance contrairement à ces derniers à blanchir en surface ou à grainer. On constate en effet sur les sucres cuits sans sucre hypocaloriques conformes à l'invention, après quelques jours de stockage une microcristallisation de mannitol à la surface des bonbons, laquelle est visible au microscope mais très difficilement à l'oeil nu. Par la suite, on ne note plus de changement d'aspect de ces bonbons.

## Revendications

1. Sucre cuit sans sucre contenant, sur matière sèche, de 5 à 100 % d'au moins un polyol cristallisable dans l'eau et présentant une teneur en eau supérieure à 3 % et une température de transition vitreuse au moins égale à 38°C, ladite température étant mesurée pour une teneur en eau de 3,2 %.

2. Sucre cuit sans sucre selon la revendication 1, contenant plus de 3,2 %, de préférence plus de 3,5 %, et plus préférentiellement plus de 4,0 % d'eau.

3. Sucre cuit sans sucre selon l'une des revendications 1 et 2, présentant une température de transition vitreuse au moins égale à 40°C, de préférence au moins égale à 43°C, et plus préférentiellement encore au moins égale à 45°C, ladite température étant mesurée pour une teneur en eau d'environ 3,2 %.

4. Sucre cuit sans sucre contenant, sur matière sèche, de 5 à 100 % d'au moins un polyol cristallisable dans l'eau et présentant une teneur en eau supérieure à 3 % et une température de transition vitreuse au moins égale à 38°C, ladite température étant mesurée pour sa teneur en eau effective.

5. Sucre cuit sans sucre selon la revendication 4, présentant une température de transition vitreuse au moins égale à 40°C, de préférence au moins égale à 43°C, et plus préférentiellement encore au moins égale à 45°C, cette température étant mesurée pour sa teneur en eau effective.

6. Sucre cuit sans sucre selon l'une quelconque des revendications 1 à 5, dans lequel le polyol cristallisable dans l'eau est choisi parmi le maltitol, l'isomalt, le mannitol, l'érythritol, le sorbitol, le xylitol et le lactitol, et de préférence parmi le maltitol, l'isomalt, le mannitol et l'érythritol.

7. Sucre cuit sans sucre selon l'une quelconque des revendications 1 à 6, contenant de 45 à 77 % de maltitol ou d'isomalt.

8. Sucre cuit sans sucre selon l'une quelconque des revendications 1 à 7, contenant de 5 à 45 % de mannitol ou d'érythritol.

9. Sucre cuit sans sucre contenant plus de 3 % d'eau, et contenant une composition de carbohydrates hydrogénés et/ou faiblement digestibles propre à lui conférer une température de transition vitreuse au moins égale à 38°C, cette température étant mesurée pour une teneur en eau de 3,2 % ou pour sa teneur en eau effective.

10. Procédé de préparation d'un sucre cuit sans sucre stable, caractérisé en ce qu'il comprend :
- la préparation d'un sirop contenant, sur matière sèche, de 5 à 100 % d'un polyol cristallisable choisi parmi le maltitol, l'isomalt, le mannitol, l'érythritol, le sorbitol, le xylitol ou le lactitol, ledit sirop étant propre à conférer au sucre cuit une température de transition vitreuse au moins égale à 38°C, cette température étant mesurée pour une teneur en eau de 3,2 % environ,
- la cuisson dudit sirop à une température suffisante pour permettre la vitrification d'une masse cuite contenant plus de 3,0 %, de préférence plus de 3,2 % et plus préférentiellement encore plus de 3,5 % d'eau.

11. Procédé de préparation d'un sucre cuit sans sucre stable, caractérisé en ce qu'il comprend :
- la préparation d'un sirop contenant, sur matière sèche, de 5 à 100 % d'un polyol cristallisable choisi parmi le maltitol, l'isomalt, le mannitol, l'érythritol, le sorbitol, le xylitol ou le lactitol, ledit sirop étant propre à conférer au sucre cuit une température de transition vitreuse au moins égale à 38°C, cette température étant mesurée pour sa teneur en eau effective,
- la cuisson dudit sirop à une température suffisante pour permettre la vitrification d'une masse cuite contenant plus de 3,0 %, de préférence plus de 3,2 % et plus préférentiellement encore plus de 3,5 % d'eau.
